# FASCICULE DE BREVET EUROPEEN

(11) **EP 1 712 882 B1**
(45) Date de publication et mention de la délivrance du brevet: **13.07.2011**
(21) Numéro de dépôt: 06006661.0
(22) Date de dépôt: 30.03.2006
(51) Int. Cl.: G01D 5/248

(54) **Capteur domotique autonome et installation comprenant un tel capteur**
Autonomer Sensor für den Hausgebrauch und einen solchen Sensor umfassende Anlage
Autonomous home sensor and installation comprising said sensor

(30) Priorité: 13.04.2005 FR 0503680
(43) Date de publication de la demande: 18.10.2006
(73) Titulaire: Somfy SAS, 74300 Cluses (FR)
(72) Inventeur: Grehant, Bernard, 74300 Nancy-Sur-Cluses (FR); Schoen, Hendrik, 72070 Tübingen-Hirschaun (DE)
(74) Mandataire: Bugnion Genève

(56) Documents cités:
- DE-A1- 3 304 962
- DE-U1- 29 924 615
- GB-A- 1 499 593
- US-A- 3 414 739
- US-A- 5 006 841
- US-A- 5 225 748

## Description

L'invention se rapporte à un capteur domotique autonome pour détecter l'existence et/ou mesurer l'intensité d'un phénomène physique. Elle concerne également une installation munie d'un tel capteur.

Dans le domaine de la domotique, il est connu d'utiliser des capteurs émetteurs pour détecter et/ou mesurer des effets de phénomènes météorologiques et de commander des dispositifs domotiques motorisés en fonction de ce que détectent ou mesurent ces capteurs. Ceci permet par exemple de protéger les stores des effets indésirables que peut avoir le vent sur ceux-ci. Pour ce faire, le capteur mesure la vitesse du vent et l'envoie périodiquement à une unité de commande des mouvements du store. Dès que la valeur de vitesse de vent dépasse une valeur seuil enregistrée dans la mémoire de l'unité de commande, celle-ci émet à destination du store, un ordre d'enroulement de sa toile. De tels capteurs émetteurs et dispositifs de commande sont connus en particulier des documents JP 02-091348 et DE 40 09 373.

Différents moyens de mesure de la vitesse du vent sont connus. La plupart des capteurs de vent utilisent un anémomètre. Un tel dispositif est par exemple connu du document DE 10223062. Cependant, d'autres types de capteurs peuvent être utilisés. Ils peuvent notamment utiliser un accéléromètre, un élément piézoélectrique, un élément électromagnétique comprenant un noyau aimanté mobile dans un solénoïde (voir le document FR 2 811 431), une thermistance (voir le document EP 1 413 694) ou un capteur de vibrations (voir le document EP 1 069 257). En outre, il est connu des documents EP 1 365 083 et DE 10223062 de mesurer les effets du vent sur un store directement au niveau de l'actionneur du store.

Dans le but de simplifier les installations domotiques et en particulier de simplifier le câblage de ces installations, il a été imaginé d'utiliser des capteurs émetteurs météorologiques autonomes. En effet, ceux-ci pouvant de plus communiquer avec des unités de commande par l'intermédiaire de liaisons sans fil, la présence des capteurs météorologiques n'impose aucun câblage supplémentaire. Dans ces capteurs autonomes, l'énergie électrique nécessaire au fonctionnement peut être fournie en convertissant l'énergie d'un phénomène météorologique. Par exemple, l'énergie solaire peut être convertie en énergie électrique grâce à un panneau photovoltaïque ou l'énergie éolienne peut être convertie en énergie électrique grâce à une roue couplée à une dynamo. De tels moyens sont par exemple décrit dans les documents JP 02-091 348, EP 0 771 929 ou EP 1 314 849. Cependant le coût de tels capteurs est élevé. En effet, ceux-ci nécessitent des moyens de stockage d'énergie de capacité relativement élevée afin que, durant une longue durée, ils puissent communiquer périodiquement à une unité de commande leurs résultats de mesures et/ou de détections.

Pour éviter une trop forte consommation, il est prévu dans ces dispositifs autonomes que l'émission n'a lieu que lorsque l'effet du phénomène météorologique mesuré dépasse un seuil fixé par l'installateur ou l'utilisateur, le dépassement de ce seuil étant alors utilisé pour commander un dispositif domotique. Cela implique que le moyen de réglage du seuil se trouve sur le capteur autonome. Dans le cas d'un anémomètre fixé en extrémité de façade, l'accès peut être délicat ou dangereux. Un réglage des seuils à distance par télécommande renchérit considérablement le coût du produit.

Toujours dans le domaine des installations domotiques, des capteurs émetteurs de type autonome sont utilisés pour déterminer un paramètre autre que celui résultant d'un phénomène météorologique. Ce paramètre est par exemple le déplacement d'un écran mobile entraîné par un actionneur. Dans la demande de brevet US 2004/0187387, l'écran mobile est une porte sectionnelle dont la partie inférieure contient une barre palpeuse de détection d'obstacle. Un émetteur radio alimenté par un générateur de type dynamo permet d'envoyer un signal si un obstacle est détecté. Des moyens connus de sauvegarde d'énergie, comme le passage en mode sommeil en absence d'action, sont prévus, mais ils impliquent la présence d'un récepteur dans le capteur mobile, de manière à permettre un dialogue entre l'unité de commande et le capteur mobile et à avertir celui-ci qu'il doit quitter le mode de sommeil. Il en résulte de nouveau un surcoût.

On connaît aussi du document SU 603906 un anémomètre comprenant une résistance variable en fonction de la température et générant un signal de sortie impulsionnel.

Le but de l'invention est de fournir un capteur émetteur autonome palliant aux problèmes évoqués précédemment et améliorant les capteurs connus de l'art antérieur. En particulier, l'invention propose un capteur autonome dont le coût est sensiblement réduit et facilitant s'il y a lieu le réglage de seuil permettant de commander des dispositifs domotiques.

Le capteur selon l'invention est défini par la revendication 1.

Différents modes de réalisation du capteur selon l'invention sont définis par les revendications dépendantes 2 à 10.

L'installation selon l'invention est définie par la revendication 11.

Différents modes de réalisation de l'installation selon l'invention sont définis par les revendications dépendantes 12 à 16.

Le dessin annexé représente, à titre d'exemples, un mode de réalisation d'un capteur météorologique autonome selon l'invention, une installation comprenant un tel capteur et un mode d'exécution d'un procédé de fonctionnement d'un capteur et d'une unité de commande.
La figure 1 est une vue schématique d'une installation de store motorisée selon l'invention.
La figure 2 est une vue schématique d'un capteur météorologique autonome selon l'invention.
La figure 3 est un graphique représentant les variations du niveau de charge énergétique d'un capteur selon l'invention en fonction du temps.
La figure 4 est un graphique représentant les émissions de signaux par le capteur selon l'invention en fonction du temps.
La figure 5 est un ordinogramme représentant un mode d'exécution d'un procédé de fonctionnement du capteur selon l'invention.
La figure 6 est un ordinogramme représentant un mode d'exécution d'un procédé de fonctionnement d'une unité de commande selon l'invention.

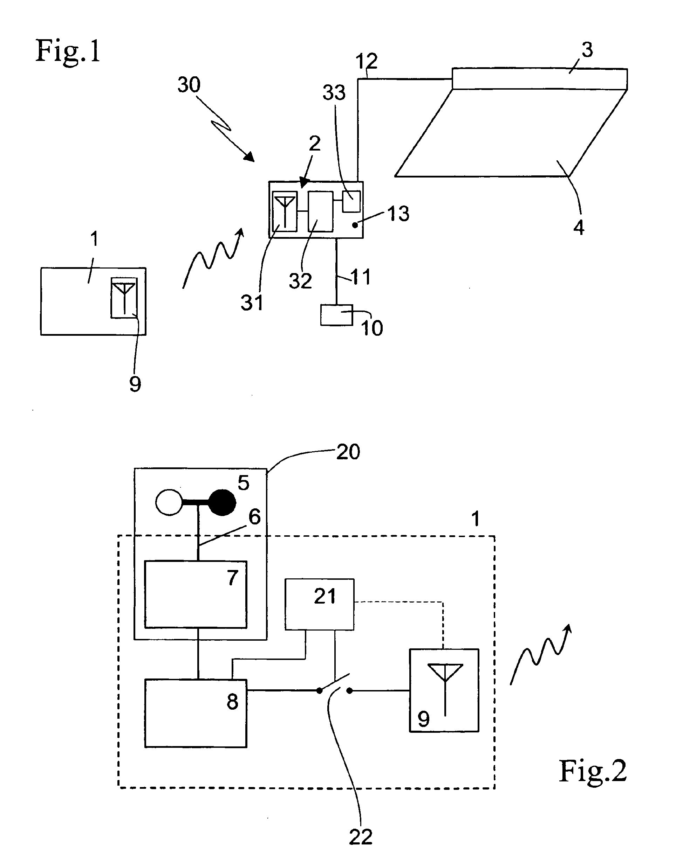

L'installation domotique 30 représentée à la figure 1 comprend principalement un dispositif de store motorisé 3, 4, une unité de commande 2 de ce dispositif et un capteur de vent 1.

Le dispositif de store motorisé comprend un actionneur électrique 3 dont la sortie est mécaniquement reliée à une toile 4. L'activation de cet actionneur électrique permet d'enrouler et de dérouler la toile 4. Alternativement, l'actionneur 3 peut entraîner tout type d'écran mobile, par exemple une porte ou un volet roulant, et le capteur un capteur de déplacement de l'écran.

L'actionneur 3 est électriquement relié à l'unité de commande 2 via un câble 12 permettant l'alimentation de l'actionneur et la transmission d'ordres de commande. Alternativement, l'actionneur et l'unité de commande peuvent communiquer grâce à une liaison sans fil.

L'unité de commande 2 comprend principalement un microcontrôleur 32 et des moyens 31 pour recevoir des signaux en provenance d'un capteur et des moyens 33 pour émettre des ordres de commande à destination de l'actionneur. Elle comprend en outre des moyens d'ajustement de seuils de paramètres météorologiques, représentés par un bouton 13, permettant de déclencher, lorsqu'ils sont franchis, des ordres de commande de l'actionneur. L'unité de commande peut être alimentée à partir du secteur 10 via un câble 11. Elle peut alternativement être alimentée grâce à une alimentation à courant continu et notamment grâce un panneau photovoltaïque.

Le capteur de vent 1, représenté à la figure 2 comprend un moyen 20 pour convertir la vitesse du vent en tension électrique, ce moyen constituant de manière générale un transducteur, un moyen 8 de stockage d'énergie électrique, un moyen 21 de mesure du niveau d'énergie électrique stockée dans le moyen de stockage et un moyen d'émission de signaux.

Le moyen de conversion de la vitesse du vent en tension électrique comprend par exemple un anémomètre 5 couplé mécaniquement par un arbre 6 à un alternateur 7 muni d'un redresseur.

La tension de sortie de l'alternateur est redressée pour alimenter le moyen de stockage d'énergie électrique qui consiste de préférence en un condensateur 8, en un supercondensateur ou en une batterie d'accumulateurs.

Le moyen de mesure du niveau d'énergie électrique stockée dans le moyen de stockage comprend par exemple un microcontrôleur 21 comprenant une entrée permettant de comparer la tension aux bornes du moyen de stockage à un seuil donné. Ce seuil est préférentiellement fixé par construction. Il peut néanmoins être prévu un moyen d'ajustement, non représenté.

Le microcontrôleur pilote un interrupteur 22 permettant de commander l'activation du moyen 9 d'émission de signaux. Ce moyen consiste de préférence en un émetteur d'ondes radioélectriques. De préférence, le microcontrôleur est relié au moyen d'émission. Ainsi, le microcontrôleur peut générer des numéros consécutifs et ceux-ci peuvent être inclus dans les signaux consécutifs émis par les moyens d'émission.

Alternativement, le moyen d'émission peut présenter un seuil de tension d'alimentation en deçà duquel il ne fonctionne pas et au-delà duquel il est automatiquement activé et émet des signaux.

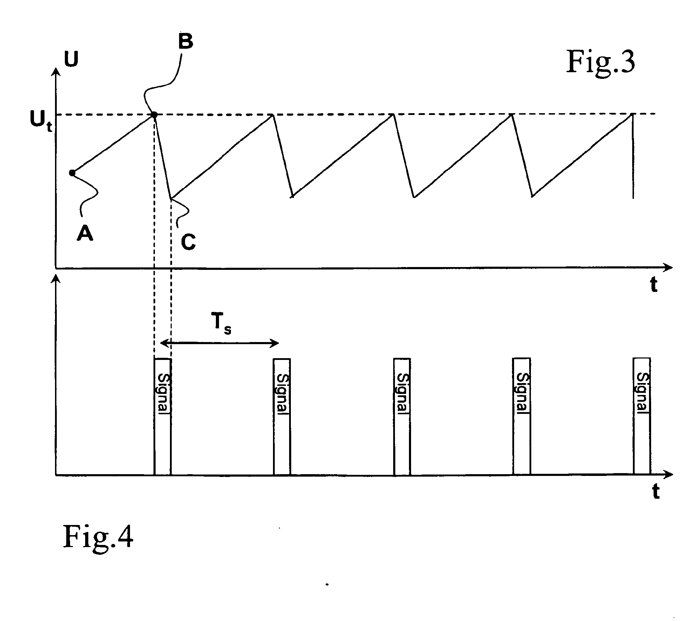

Un mode d'exécution du procédé de fonctionnement du capteur 1 est décrit en référence aux figures 3, 4 et 5.

On suppose préalablement que le condensateur 8 est faiblement chargé. Le niveau de charge correspond au point A indiqué sur la figure 3.

Dans une première étape 100, la présence de vent fait tourner l'anémomètre 5 et l'alternateur 7, le condensateur 8 est donc chargé progressivement.

La constante de temps de la charge dépend de la résistance interne du circuit comportant l'alternateur et le redresseur. Cette résistance peut être augmentée par l'ajout volontaire d'une résistance de forte valeur. Dans ce cas, le début de charge du condensateur est pratiquement linéaire si, pour la vitesse de rotation considérée, la tension de sortie de l'alternateur est grande devant la tension de seuil.

Alternativement, un montage convertisseur de type élévateur permet d'élever progressivement la tension aux bornes du condensateur, à des valeurs supérieures à celle aux bornes de l'alternateur. Le fait important est ici que le condensateur se charge progressivement, et si possible linéairement dans le temps, lorsque l'alternateur est entraîné à une vitesse constante.

Dans une deuxième étape 110, on teste si la tension aux bornes du condensateur 8 est supérieure à une tension seuil Ut. Ce test peut être effectué par le microcontrôleur 21 ou par l'émetteur de signaux 9. Si tel n'est pas le cas on boucle sur l'étape 100 pendant laquelle le condensateur continue d'être chargé.

Si tel est le cas le niveau de charge du condensateur se situe au niveau du point B représenté sur la figure 3 et on passe à une étape 120 à laquelle un signal est émis par l'émetteur 9 du capteur 1. L'émission d'un signal est représentée par un rectangle sur la figure 4. La puissance consommée par le capteur durant l'émission de signaux étant très supérieure à la puissance convertie par l'alternateur même en cas de vent fort, le condensateur 8 se décharge pendant cette étape. Dès la fin de cette étape 120, la tension du condensateur se situe au niveau représenté par le point C sur la figure 3. A l'issue de cette étape 120, on boucle sur l'étape 110.

Théoriquement, la puissance consommée lors de l'émission d'un signal étant bien supérieure à celle convertie par l'alternateur, après l'émission d'un signal, la tension aux bornes du condensateur 8 est inférieure à la tension Ut et le condensateur doit être rechargé dans l'étape 100 pendant un certain temps avant qu'un nouveau signal soit émis.

Suivant la force du vent, les rampes de charge du condensateur 8 (entre le point A et le point B) sont plus ou moins raides. Ainsi, en cas de vent fort, l'intervalle Ts séparant deux émissions successives d'un signal par le capteur est plus faible que lorsque le vent est faible, la puissance convertie par l'alternateur étant plus forte alors que l'énergie consommée pour l'émission d'un signal est identique.

De cette façon, la durée de l'intervalle temporel séparant l'émission de deux signaux consécutifs est représentative de la vitesse du vent et l'indication de mesure de vitesse de vent n'est pas contenue dans les signaux eux-mêmes. Ainsi, la fréquence d'émission des signaux constitue une information de mesure de l'intensité de la vitesse du vent.

Cependant, le capteur peut comprendre des moyens (non représentés) de mesure de la puissance fournie par l'alternateur. Ainsi, la valeur de puissance mesurée (représentative de la vitesse du vent) peut être incluse dans les signaux émis par le capteur. Alternativement, des mesures d'autres paramètres peuvent être inclus dans la trame.

Préférentiellement, la durée d'émission du signal est très courte devant la durée de charge du condensateur. Par exemple, une trame d'émission dure 50 millisecondes, alors que la durée de charge par vent faible nécessitera 4 secondes, et nécessitera 1 seconde seulement par vent fort. Ainsi, même par vent fort, le spectre radio reste faiblement utilisé, par exemple avec un rapport cyclique de 1/20.

La trame d'émission d'un signal contient préférentiellement 4 bits d'identification permettant de reconnaître un capteur parmi 16 capteurs voisins que contiendrait l'installation et 4 bits d'indication de numéro de trame. 8 bits suffisent alors pour contenir toute l'information utile dans ce type de fonctionnement, alors que les protocoles couramment utilisés dans la radiocommande de produits domotiques nécessitent 56 ou 80 bits. Une trame de 30 millisecondes est donc parfaitement utilisable dans ces conditions.

Le procédé de fonctionnement du capteur de vent fait qu'en cas d'absence de vent le condensateur n'est pas rechargé et que, par conséquent, le capteur n'émet pas de signal. Ceci n'est pas gênant puisque le capteur est utilisé pour détecter des seuils de vitesse de vent au-delà desquels l'élément mobile du store doit être replié, et que la valeur de la vitesse du vent en deçà de ce seuil importe peu. Il en serait de même pour un capteur d'ensoleillement destiné à provoquer inversement le déploiement d'un store quand la valeur de flux capté par le capteur dépasse un certain seuil.

De préférence, dans l'étape 120, les signaux émis sont numérotés consécutivement et ces numéros sont inclus dans les signaux. Ainsi, si certains signaux émis ne sont pas reçus par l'unité de commande, celle-ci est informée de leur existence par l'analyse des numéros contenus dans les signaux et peut tenir compte de ceux-ci lorsqu'elle détermine la vitesse du vent.

Un capteur selon l'invention peut comprendre des moyens de stockage d'énergie électrique dont la capacité est fortement diminuée par rapport à celle des moyens de stockage d'énergie équipant les capteurs connus de l'art antérieur. Il s'ensuit une baisse significative du coût de fabrication des capteurs.

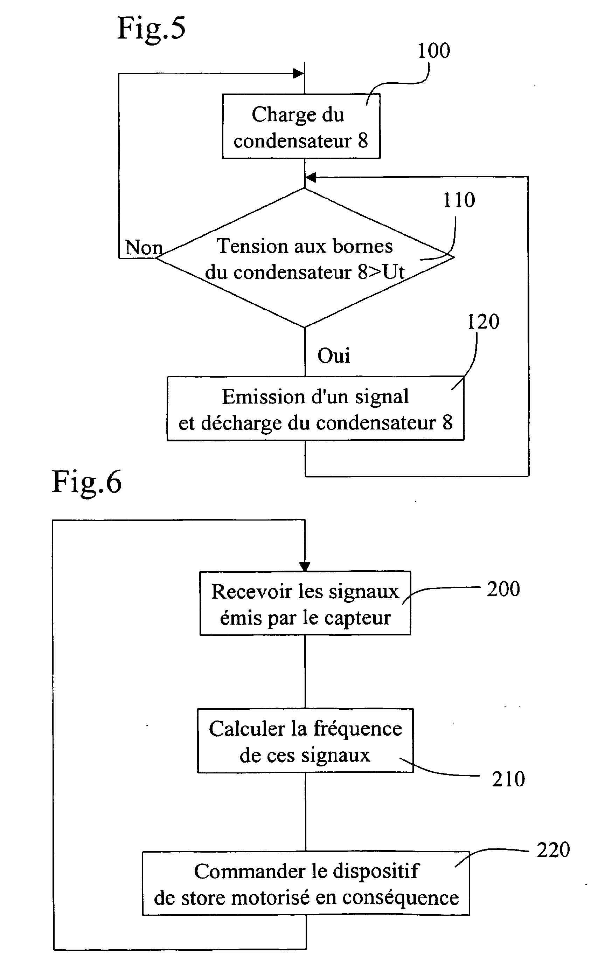

Un mode d'exécution du procédé de fonctionnement de l'unité de commande 2 est décrit en référence à la figure 6.

Dans une première étape 200, l'unité de commande reçoit les signaux émis par le capteur de vent.

Dans une deuxième étape 210, l'unité de commande calcule le nombre de signaux reçus pendant une période donnée. Elle peut alternativement calculer la fréquence de répétition des signaux reçus ou encore la durée moyenne des intervalles séparant deux signaux consécutifs sur cette période donnée. Elle peut également calculer le temps séparant la réception des deux derniers signaux.

Dans une troisième étape 220, en fonction des résultats obtenus, l'unité de commande envoie ou non un ordre de commande de mouvement de l'élément mobile. En particulier, l'unité de commande envoie un ordre de repli de l'élément mobile si la vitesse du vent a dépassé une valeur seuil fixée grâce au bouton 13 de l'unité de commande.

Le procédé boucle ensuite sur l'étape 200.

Sans qu'il soit besoin de le décrire en détail, l'invention s'applique de même après une période de vent fort, quand l'unité de commande détecte que la fréquence de répétition des signaux émis passe en dessous d'un seuil de sécurité. Le seuil de sécurité est déterminé de manière à être inférieur au seuil de danger qui a été réglé par le bouton 13.

Bien que le capteur décrit soit destiné à mesurer la vitesse du vent, le capteur selon l'invention peut être destiné à mesurer d'autres grandeurs en particulier d'autres grandeurs météorologiques telles que la présence de pluie ou la luminosité. Dans le cas de la détection de présence de pluie, le capteur comprend de préférence un élément piézo-électrique pour transformer l'énergie due aux impacts de gouttes de pluies en énergie électrique. Un tel dispositif est connu du brevet US 5,119,002. Dans le cas de la mesure de la luminosité, le capteur comprend de préférence un élément photovoltaïque pour transformer l'énergie lumineuse en énergie électrique. Le seuil ajusté à l'aide du bouton 13 est alors un seuil de confort.

D'autres moyens que ceux décrits peuvent être utilisés pour convertir l'énergie éolienne en énergie électrique. En particulier, des capteurs de vibrations comprenant des moyens électromagnétiques, électrostatiques ou piézo-électriques de conversion d'énergie peuvent être utilisés (voir la thèse de doctorat de S.J. Roundy, Université de Californie Berkeley, 2003).

Le capteur peut permettre de détecter et/ou mesurer plusieurs paramètres. Au moins l'un des paramètres fixe la fréquence de répétition des signaux, la valeur des autres paramètres étant alors contenue dans le signal émis.

Plusieurs capteurs selon l'invention peuvent être utilisés pour protéger ou équiper un même dispositif domotique. Préférentiellement, un identifiant codé sur 4 bits permet de reconnaître le capteur émetteur. Alternativement les fréquences porteuses des signaux sont différentes d'un capteur à l'autre. Un ensemble de 4 micro-interrupteurs permet d'affecter un identifiant ou une fréquence à chaque capteur émetteur. Ainsi, en cas de dysfonctionnement de l'un des capteurs l'autre peut continuer à fournir des informations fiables sur la base desquelles l'unité de commande peut émettre des ordres en direction du dispositif domotique commandé.

Quand les capteurs fonctionnent correctement, l'unité de commande identifie l'origine des différents signaux. Elle peut aussi établir une corrélation entre les valeurs indiquées par les différents capteurs, ce qui permet de déterminer par exemple une direction au phénomène météorologique considéré (sens du vent, direction d'ensoleillement...). Le fait que les émissions occupent un très faible rapport cyclique exclut statistiquement qu'elles puissent se produire durablement de manière synchrone. Les brouillages sont donc occasionnels et l'unité de commande y fait face par analyse des identifiants et des numéros de trame.

Dans une version très simplifiée, il y a émission de la simple fréquence porteuse, sans modulation de celle-ci pour constituer une trame. Le signal est simplement constitué par l'émission de la porteuse HF, pendant un temps très court devant l'intervalle de temps séparant deux émissions.

Pour permettre néanmoins la numérotation de signaux successifs (et donc tenir compte d'éventuels brouillages lors de la réception) la fréquence porteuse HF varie, selon un ordre prédéfini, d'une émission à l'autre. Par exemple, il y a 64 valeurs différentes de fréquence porteuse pour un même capteur dans la bande qui lui est allouée, et celles-ci sont utilisées de manière croissante jusqu'à reprendre la valeur initiale lors de la 65^{e} émission. Le récepteur est muni de moyens de détermination de la fréquence porteuse HF reçue, et peut ainsi identifier une absence éventuelle d'un signal et en tenir compte dans la mesure de temps séparant deux émissions consécutives. L'ordre d'émission des fréquences porteuses peut aussi présenter une apparence aléatoire : il suffit qu'il soit connu à la fois de l'émetteur et du récepteur.

Préférentiellement, une « fenêtre » est utilisée pour ne tenir compte que des fréquences porteuses susceptibles de suivre logiquement la dernière reçue. Si la fréquence porteuse croît de manière régulière, avec un incrément delta-F entre deux émissions, le récepteur n'acceptera par exemple que les signaux de fréquence comprise entre une fois et cinq fois delta-F au dessus de la dernière fréquence reçue.

Un tel fonctionnement rend plus complexe le récepteur, mais il permet d'avoir un émetteur très simple et de très faible consommation.

L'invention a été décrite dans le cas où le paramètre agissant sur le capteur est une action affectant l'écran mobile, en particulier l'intensité d'un phénomène météorologique telle la puissance de vent. L'ensoleillement ou la pluie sont également des phénomènes météorologiques dont l'intensité affecte l'écran mobile, s'il s'agit par exemple d'un store permettant de réguler les effets de ces phénomènes.

L'action affectant l'écran mobile peut aussi être l'intensité de son déplacement, par exemple la vitesse de déplacement, ou encore la vitesse vibratoire, que le déplacement soit dû à l'actionneur lui-même ou à une autre cause (action manuelle de l'utilisateur). Ainsi, l'invention s'applique de manière particulièrement efficace à une installation domotique telle qu'une porte sectionnelle motorisée de type décrit dans la demande de brevet US 2004/0187387 et permet d'y remplacer une transmission bidirectionnelle entre un capteur de vitesse de déplacement de la porte et une unité de commande par une transmission unidirectionelle, tout en minimisant encore les besoins en stockage d'énergie au niveau du capteur. Dans une telle installation, le capteur comprend un transducteur tel que par exemple un petit alternateur. Son rotor est lié mécaniquement à l'une des pièces tournantes de la chaîne cinématique permettant d'entraîner la porte sous l'effet d'un actionneur. Ainsi, l'alternateur convertit la vitesse de déplacement de la porte sectionnelle en énergie électrique de manière à charger un condensateur. Ce capteur fonctionnant sur le même principe que celui décrit en référence à la figure 2, la fréquence de répétition de l'émission de signaux envoyés par un émetteur est directement proportionnelle à cette vitesse de déplacement de la porte.

Le signal peut contenir dans sa trame une information relative à un deuxième paramètre, par exemple l'état d'une barre palpeuse.

## Revendications

1. Capteur domotique (1) autonome pour détecter l'existence et/ou mesurer l'intensité d'un phénomène physique, comprenant un moyen (20) de conversion d'un effet du phénomène physique en énergie électrique, un moyen (9) d'émission pour émettre au moins une trame d'émission d'un signal, et des moyens (8, 21) pour commander l'émission d'ondes radioélectriques pour émettre des signaux consécutifs à une fréquence de répétition dépendant de l'intensité du phénomène physique et constituant une information de mesure de l'intensité du phénomène physique, la trame d'émission du signal comprenant un identifiant permettant de reconnaître le capteur.

2. Capteur domotique (1) selon la revendication 1, dans lequel les moyens pour commander l'émission de signaux à une fréquence de répétition dépendante de l'intensité, du phénomène physique, comprennent un moyen (8) de stockage d'énergie électrique rechargé par le moyen (20) de conversion en énergie électrique et un moyen (21) de mesure du niveau de charge du moyen de stockage, le moyen (9) d'émission n'émettant un signal que si le moyen (21) de mesure du niveau de charge du moyen de stockage mesure un niveau de charge supérieur à un seuil donné.

3. Capteur domotique (1) selon la revendication 2, dans lequel l'émission d'un signal provoque la décharge partielle du moyen de stockage (8).

4. Capteur domotique (1) selon l'une des revendications précédentes, comprenant un moyen (21) utilisé pour affecter des numéros consécutifs aux signaux émis par le moyen d'émission et pour inclure ces numéros dans ces signaux ou utilisé pour faire varier la fréquence porteuse du signal lors de chaque émission.

5. Capteur domotique (1) selon l'une des revendications précédentes, comprenant des moyens de mesure de l'intensité d'un phénomène physique et des moyens pour inclure dans les signaux une grandeur représentative de l'intensité d'un phénomène physique.

6. Capteur domotique (1) selon l'une des revendications précédentes, dans lequel le moyen (9) d'émission est un moyen sans fil.

7. Capteur domotique (1) selon la revendication précédente, dans lequel le moyen (9) d'émission est un moyen d'émission du type à ondes radioélectriques.

8. Capteur domotique (1) selon l'une des revendications précédentes, dans lequel le phénomène physique est un phénomène météorologique.

9. Capteur domotique (1) selon l'une des revendications précédentes, dans lequel la fréquence de répétition du signal et son rapport cyclique sont déterminés par les puissances relatives du moyen (20) de conversion d'un effet du phénomène physique en énergie électrique et du moyen (9) d'émission.

10. Capteur domotique (1) selon l'une des revendications précédentes, dans lequel la fréquence de répétition du signal est proportionnelle à l'intensité du phénomène physique.

11. Installation (30) comprenant au moins un capteur selon l'une des revendications précédentes et une unité de commande (2) d'un actionneur (3) agissant sur un écran mobile (4), l'unité de commande étant munie de moyens (31) de réception de signaux et apte à mesurer la fréquence de répétition du signal pour commander l'actionneur en conséquence.

12. Installation selon la revendication 11, dans laquelle les moyens de réception de signaux sont aptes à identifier un numéro d'ordre de signal à partir d'une information comprise dans la trame reçue ou dans la fréquence porteuse du signal.

13. Installation selon la revendication 11 ou 12, dans laquelle l'unité de commande comporte un moyen de réglage (13) d'au moins un seuil relatif à l'intensité d'un phénomène physique.

14. Installation (30) selon l'une des revendications 11 à 13, dans laquelle l'écran (4) est un écran mobile de fermeture, d'occultation ou de protection solaire.

15. Installation selon l'une des revendications 11 à 14, dans laquelle le phénomène physique a un effet sur l'écran mobile.

16. Installation selon la revendication 15, dans laquelle le phénomène physique est :
- un phénomène météorologique tel que notamment le vent, la pluie ou l'ensoleillement ou
- un déplacement de l'écran provoqué par l'actionneur ou
- un déplacement de l'écran non provoqué par l'actionneur.

## Claims

1. Self-powered home automation sensor (1) for detecting the existence of a physical phenomenon and/or for measuring its intensity, including a means (20) for converting an effect of the physical phenomenon into electric energy, a transmitting means (9) for transmitting at least one transmission frame of a signal, and means (8, 21) for controlling the transmission of radioelectric waves in order to transmit consecutive signals at a repetition frequency depending on the intensity of the physical phenomenon and constituting an information about the intensity measure of the physical phenomenon, the transmission frame of the signal comprising an identifier allowing to recognise the sensor.

2. Home automation sensor (1) according to claim 1, wherein the means for controlling the transmission of signals with a repetition frequency that depends upon the intensity of the physical phenomenon comprise an electric energy storing means (8) recharged by the means (20) for converting into electric energy, and a means (21) for measuring the charge level of the storage means, the transmitting means (9) only transmitting a signal if the charge level measuring means (21) for the storage means measure a charge level exceeding a given threshold value.

3. Home automation sensor (1) according to claim 2, wherein the transmission of a signal causes a partial discharge of the storing means (8).

4. Home automation sensor (1) according to any one of the preceding claims, including a means (21) used for attributing consecutive numbers to the signals that are transmitted by the transmitting means and for including these numbers in the signals, or used for varying the carrier frequency of the signal at each transmission.

5. Home automation sensor (1) according to any one of the preceding claims, including means for measuring the intensity of a physical phenomenon, and means for including a quantity representative of the intensity of a physical phenomenon, into the signals.

6. Home automation sensor (1) according to any one of the preceding claims, wherein the transmission means (9) is a wireless means.

7. Home automation sensor (1) according to the preceding claim, wherein the transmission means (9) is a transmission means based on radioelectric waves.

8. Home automation sensor (1) according to any one of the preceding claims, wherein the physical phenomenon is a meteorological phenomenon.

9. Home automation sensor (1) according to any one of the preceding claims, wherein the repetition frequency of the signal and its duty factor are determined by the relative powers of the means (20) for converting an effect of the physical phenomenon into electric energy, and of the transmission means (9).

10. Home automation sensor (1) according to any one of the preceding claims, wherein the repetition frequency of the signal is proportional to the intensity of the physical phenomenon.

11. Installation (30), including at least one sensor according to any one of the preceding claims, and a control unit (2) of an actuator (3) acting upon a mobile screen (4), the control unit being equipped with signal reception means (31) and capable of measuring the repetition frequency of signals for controlling the actuator in response thereto.

12. Installation according to claim 11, wherein the signal receiving means are capable of identifying a serial number of a signal from an information included in the received frame or in the carrier frequency of the signal.

13. Installation according to claim 11 or 12, wherein the control unit includes a means (13) for adjusting at least one threshold relating to the intensity of a physical phenomenon.

14. Installation (30) according to any one of claims 11 to 13, wherein the screen (4) is a mobile screen for closing, privacy or solar protection.

15. Installation according to any one of claims 11 to 14, wherein the physical phenomenon causes an effect on the mobile screen.

16. Installation according to claim 15, wherein the physical phenomenon is
- a meteorological phenomenon such as especially wind, rain or insolation, or
- a displacement of the screen, provoked by the actuator, or
- a displacement of the screen, not provoked by the actuator.

## Patentansprüche

1. Autonomer haustechnischer Sensor (1) zur Ermittlung des Vorliegens einer physikalischen Erscheinung und/oder zur Messung deren Intensität, mit einem Mittel (20) zur Umwandlung einer Wirkung der physikalischen Erscheinung in elektrische Energie, einem Sendemittel (9) zum Senden mindestens eines Senderasters eines Signals, sowie mit Mitteln (8, 21) zur Steuerung der Sendung von Funkwellen zwecks Übermittlung von Signalen anschliessend an eine von der Stärke der physikalischen Erscheinung abhängige Wiederholfrequenz, die eine Information über die Messung der Stärke der physikalischen Erscheinung darstellt, wobei das Senderaster des Signals ein Identitätssignal aufweist, das die Kennung des Sensors ermöglicht.

2. Haustechnischer Sensor (1) nach Anspruch 1, bei dem die Mittel zur Steuerung der Übermittlung von Signalen mit einer Wiederholfrequenz, welche von der Stärke der physikalischen Erscheinung abhängt, ein Mittel (8) zur Speicherung elektrischer Energie aufweisen, welches vom Mittel (20) zur Umwandlung von elektrischer Energie aufgeladen wird, sowie ein Mittel (21) zum Messen des Ladezustandes des Speichermittels, wobei das Sendemittel (9) nur dann ein Signal aussendet, wenn das Mittel (21) zum Messen des Ladezustandes des Speichermittels einen Ladezustand misst, der oberhalb eines vorgegebenen Schwellenwertes liegt.

3. Haustechnischer Sensor (1) nach Anspruch 2, bei dem die Übermittlung eines Signals eine teilweise Entladung des Speichermittels (8) verursacht.

4. Haustechnischer Sensor (1) nach einem der vorstehenden Ansprüche, welcher ein Mittel (21) aufweist, das zur Zuteilung aufeinanderfolgender Nummern an die Signale, die vom Sendemittel übermittelt werden, und zum Einschluss dieser Nummern in diese Signale verwendet wird, oder das bei jedem Sendevorgang zur Veränderung der Trägerfrequenz des Signals dient.

5. Haustechnischer Sensor (1) nach einem der vorstehenden Ansprüche, welcher Mittel zum Messen der Stärke einer physikalischen Erscheinung und Mittel zum Einschluss einer Grösse, welche für die Stärke der physikalischen Erscheinung repräsentativ ist, in die Signale aufweist.

6. Haustechnischer Sensor (1) nach einem der vorstehenden Ansprüche, bei dem das Sendemittel (9) ein drahtloses Mittel ist.

7. Haustechnischer Sensor (1) nach vorstehendem Anspruch, bei dem das Sendemittel (9) ein Sendemittel unter Verwendung von Funkwellen ist.

8. Haustechnischer Sensor (1) nach einem der vorstehenden Ansprüche, bei dem die physikalische Erscheinung eine meteorologische Erscheinung ist.

9. Haustechnischer Sensor (1) nach einem der vorstehenden Ansprüche, bei dem die Wiederholfrequenz des Signals und deren Tastverhältnis durch die relativen Leistungen des Mittels (20) zur Umwandlung einer Wirkung der physikalischen Erscheinung in elektrische Energie und des Sendemittels (9) bestimmt wird.

10. Haustechnischer Sensor (1) nach einem der vorstehenden Ansprüche, bei dem die Wiederholfrequenz des Signals der Stärke der physikalischen Erscheinung proportional ist.

11. Anlage (30), welche mindestens einen Sensor nach einem der vorstehenden Ansprüche sowie eine Steuereinheit (2) eines Antriebs (3) aufweist, der auf einen beweglichen Schirm (4) einwirkt, wobei die Steuereinheit mit Mitteln (31) zum Signalempfang ausgestattet und in der Lage ist, die Wiederholfrequenz des Signals zu messen, um den Antrieb entsprechend zu steuern.

12. Anlage nach Anspruch 11, bei der die Mittel zum Signalempfang dazu eingerichtet sind, eine Ordnungsnummer des Signals ausgehend von einer Information zu identifizieren, welche im empfangenen Raster oder in der Trägerfrequenz des Signals enthalten ist.

13. Anlage nach Anspruch 11 oder 12, bei der die Steuereinheit ein Mittel (13) zum Einstellen mindestens eines Schwellenwertes enthält, welcher sich auf die Stärke einer physikalischen Erscheinung bezieht.

14. Anlage (30) nach einem der Ansprüche 11 bis 13, bei der die Abschirmung (4) ein beweglicher Schirm zum Verschliessen, Abdunkeln oder zum Sonnenschutz ist.

15. Anlage nach einem der Ansprüche 11 bis 14, bei welcher die physikalische Erscheinung eine Wirkung auf die bewegliche Abschirmung ausübt.

16. Anlage nach Anspruch 15, bei der die physikalische Erscheinung folgende ist:
- eine meteorologische Erscheinung, insbesondere Wind, Regen oder Sonneneinstrahlung, oder
- eine Verschiebung der Abschirmung, die durch den Antrieb veranlasst wird, oder
- eine Verschiebung der Abschirmung, welche nicht vom Antrieb bewirkt wird.
